# EUROPEAN PATENT APPLICATION

(11) **EP 2 056 009 A2**
(43) Date of publication of application: **06.05.2009**
(21) Application number: 08018842.8
(22) Date of filing: 28.10.2008
(51) Int. Cl.: F16L 19/00, F16L 21/08, F16L 19/06, F16L 33/22

(54) **Joint for plastic pipes, with toothed locking device**

(30) Priority: 30.10.2007 IT MI20070362 U
(71) Applicant: Aquatechnik S.p.A., 20020 Magnago, Milan (IT)
(72) Inventor: Petena', Lino, 21052 Busto Arsizio Varese (IT)
(74) Representative: Coloberti, Luigi

(57) **Abstract**

A joint (10) for plastic pipes, with a toothed locking device; the joint (10) comprises at least one pipe connector (14) consisting of a tubular end section, tightly fittable into one end of a pipe (12), and a threaded locking ring (11) for locking the pipe (12), the locking ring (11) being screwable onto a threaded part (17) of the pipe connector (14). The pipe connector (14) and the threaded locking ring (11) are shaped with mutually engageable retaining teeth (20, 21), which enable the rotation of the locking ring (11) in the screwing direction, and preventing it from rotating in the opposite direction.

## Description

### BACKGROUND OF THE INVENTION

This invention concerns a joint for plastic pipes, and in particular a joint of the type comprising at least one pipe connector shaped with a toothed locking device, capable of preventing tampering of the joint and preventing the pipe from accidentally slipping out. This invention applies to linear joints, corner or elbow joints, T joints or any other type, used for connecting plastic pipes in plumbing systems, heating systems, air-conditioning or compressed air systems.

### PRIOR ART

In the field of plumbing, heating, air-conditioning and compressed air systems, the use of plastic pipes is widely known, which are connected to one another by means of suitable variously shaped joints having two or more pipe connectors, either of the screw type or of the press-fitting type.

In particular, a press-fitting pipe connector comprises a tubular end section capable of being tightly inserted into a bell-shaped end of a plastic pipe, the bell-shaped end being locked to the pipe connector by means of a locking ring screwable onto the same joint.

Within the field of such joints there is the problem of preventing the threaded locking ring from accidentally becoming loose or being intentionally unscrewed, causing a partial or total extraction of the pipe and loss of the fluid conveyed.

### OBJECTS OF THE INVENTION

The object of this invention is to provide a joint for plastic pipes, of the aforementioned kind, provided with a suitable safety device which prevents or hinders an accidental or intentional unscrewing of the threaded locking ring.

A further object of the invention is to provide a joint for plastic pipes comprising a pipe connector provided with an anti-unscrewing device for preventing the unscrewing of the threaded locking ring, forming an integral part of the same pipe connector, by an extremely simple and inexpensive solution.

### BRIEF DESCRIPTION OF THE INVENTION

The foregoing can be achieved by means of a pipe joint, comprising a body of plastic material defining a flow path between a first and at least a second pipe connector for connection to pipes, and in which at least one of the pipe connectors comprises a tubular end section designed to be tightly fittable into one end of a pipe, and a threaded locking ring for locking the pipe, screwable onto the pipe connector, characterised in that the pipe connector provided with said fittable tubular section comprises at least one toothed sector, having angularly spaced apart retaining teeth, and in that the threaded locking ring in turn comprises a toothed crown, whose retaining teeth are engagable with the retaining teeth of the pipe connector during screwing, the retaining teeth being shaped and disposed to allow the rotation of the threaded locking ring in the screwing direction, and preventing it from rotating in the opposite direction.

### BRIEF DESCRIPTION OF THE DRAWINGS

The above will be described in greater detail with reference to the example of the accompanying drawings, in which:
Fig. 1 shows an exploded perspective view of a generic joint according to this invention;
Fig. 2 shows a longitudinal cross-sectional view of the joint and of the threaded locking ring of figure 1, in an assembled condition;
Fig. 3 shows a cross-sectional view along the line 3-3 of figure 2;
Fig. 4 shows an enlarged detail of figure 3 illustrating a particular configuration of the retaining teeth, capable of allowing the rotation of the threaded locking ring in the screwing direction;
Fig. 5 shows an enlarged detail similar to that of figure 4, designed to show the engagement between the retaining teeth, in order to prevent the rotation of the threaded locking ring in the opposite direction to the screwing direction.

### DETAILED DESCRIPTION OF THE INVENTION

The innovative features of this invention will be illustrated hereunder with reference to a specific linear joint; however, it is pointed out that the innovative features of the locking device can be applied to any type of joint, with two or more screw and/or snap-on and/or press-fitting pipe connectors, regardless of the shape and specific characteristics of the same joint, or for similar applications, for example for modular elements of manifolds.

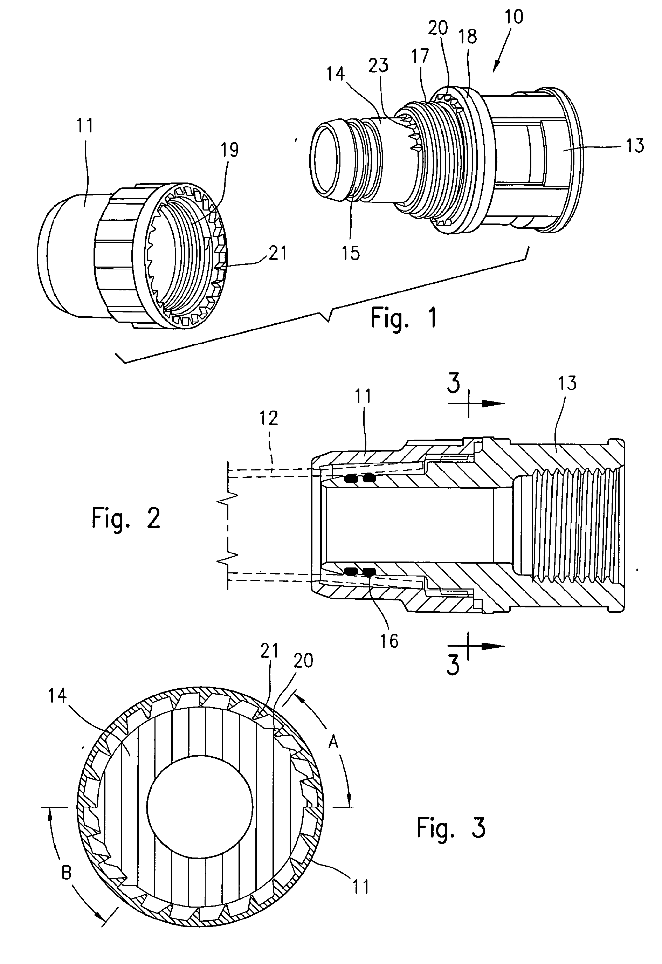

Figure 1 shows an exploded perspective view of a linear joint 10 having a locking ring 11 for locking a plastic pipe 12, shown in the assembled condition of figure 2.

The joint 10 of the example comprises a first internally threaded pipe connector 13, and a second pipe connector 14 consisting of a tubular end section axially aligned and in communication with the first connector 13, the second connector 14 being shaped in such a way as to be tightly fittable into a bell-shaped end of the plastic pipe 12, in a per se known way; in this connection, the tubular section 14 is provided with circular grooves 15 for housing respective annular gaskets 16.

To the rear of the tubular section 14, the joint comprises a threaded part 17 for screwing on the locking ring 11 for locking the pipe; the screw thread 17 axially extends for a brief length, ending in correspondence with an annular shoulder 18.

The locking ring 11 in turn is provided with an internal screw thread 19 which is screwable onto the external screw thread 17 of the joint 10.

Both the threaded locking ring 11 and the pipe connector 14 in correspondence with the shoulder 18, comprise mutually engageable retaining teeth, shaped and disposed in such a way as to allow the rotation of the locking ring 11 in the screwing direction, and preventing or hindering it from rotating in the opposite direction, thereby creating an efficient anti-tampering system, which prevents or impedes an accidental or intentional unscrewing of the locking ring 11 liable to jeopardise the seal of the joint.

More precisely, the fittable pipe connector 14, at angularly spaced apart positions adjacent to the annular shoulder 18, is provided with a plurality of retaining teeth 20 which extend radially outwards, while the locking ring 11 in correspondence with its front edge, coaxially to the screw thread 19, comprises a circular crown of teeth 21 designed to engage with the teeth 20 of the joint.

In particular, the pipe connector 14 has two series of four angularly spaced apart retaining teeth 20, along two diametrically opposed arched sectors A and B; however, both the number of toothed sectors and the number of teeth 20 for each sector, may also differ from that shown; conversely, the locking ring 11 has a circular crown of teeth 21 which radially extend inwards with the same pitch of the teeth 20 of the joint 10.

The retaining teeth 20 and 21 can be shaped in any way and disposed in a way capable of allowing the rotation of the locking ring 11 in the screwing direction on the screw thread 17 of the joint, preventing it or substantially impeding it from rotating in the opposite direction.

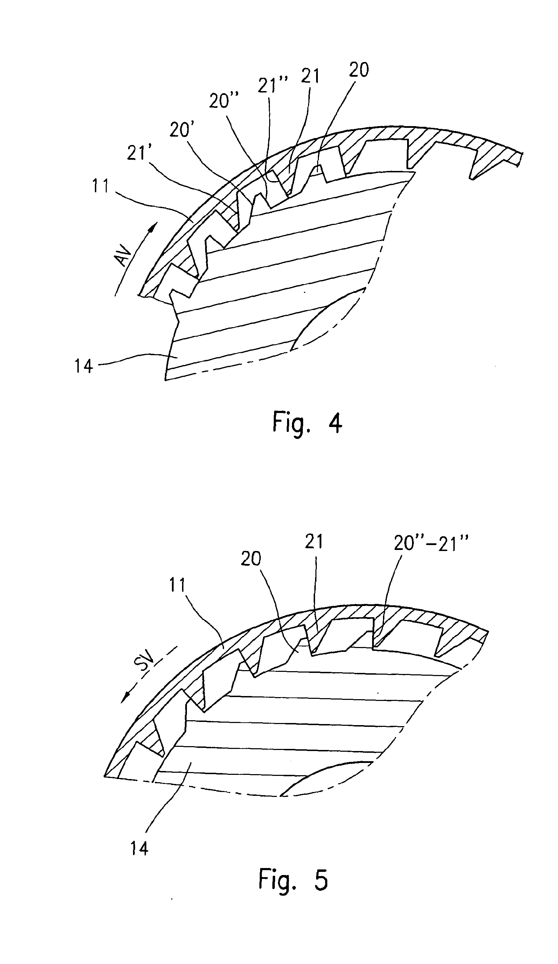

As shown, both the teeth 20 and the teeth 21 have a triangular, or "saw-toothed" profile, having slanted sides 20' and 21' of the teeth opposed to one another. By appropriately choosing the size of the teeth 20, 21 and the inclination of the sides 20' and 21', and thanks to the elastic deformability of the plastic material itself, the locking ring 11 can be made to rotate in the screwing direction indicated by the arrow AV in figure 4.

Conversely, the rotation in the opposite direction indicated by the arrow SV in figure 5, is impeded by the interference between the sides 20" and 21" of the teeth, which extend in radial planes.

Lastly, the tubular end section of the pipe connector 14, close to the screw thread 17 is provided with a second series of triangular teeth 23, figure 1, designed to partially penetrate into the front edge of the bell of a pipe 12 to be connected, to prevent the latter from being rotated by the threaded locking ring during screwing.

From what has been described and shown, it will be evident therefore that a joint for plastic pipes has been provided, of the type comprising at least one pipe connector that can be press fitted into the end of a pipe, and a threaded locking ring, both provided with suitable stop teeth for stopping the locking ring, shaped and disposed in such a way as to allow the locking ring to be screwed onto the pipe connector for connection to the pipe, and preventing it from rotating in the opposite direction.

In the example shown, the retaining teeth have a saw-tooth profile oriented in a radial direction to the longitudinal axis of the joint or of the pipe connector. It is understood however that the shape, dispositions and number of the teeth may also differ from that shown, without thereby deviating from the scope of protection defined by the claims.

## Claims

1. A pipe joint (10), comprising a body of plastic material defining a flow path between a first and at least a second pipe connector (13, 14) for connection to pipes (12), and in which at least one of the pipe connectors (14) comprises a tubular end section designed to be tightly fittable into one end of a pipe (12), and a threaded locking ring (11) for locking the pipe (12), screwable onto the pipe connector (14), **characterised in that** the pipe connector (14) provided with said fittable tubular section comprises at least one toothed sector, having angularly spaced apart retaining teeth (20), and **in that** the threaded locking ring (11) in turn comprises a toothed crown, whose retaining teeth (21) are engagable with the retaining teeth (20) of the pipe connector (14) during screwing, the retaining teeth (20, 21) being shaped and disposed to allow the rotation of the threaded locking ring (11) in the screwing direction, and preventing it from rotating in the opposite direction

2. Pipe joint (10) according to claim 1, **characterised in that** the fittable pipe connector (14) has at least a first and a second toothed sector in angularly spaced apart positions.

3. Pipe joint (10) according to claim 1, **characterised in that** the retaining teeth (20, 21) have a triangular profile.

4. Pipe joint (10) according to claim 3, **characterised in that** the teeth (20) of the pipe connector (14) and the teeth (21) of the threaded locking ring (11) have opposite saw-tooth shaped profiles.

5. Pipe joint (10) according to claim 3, **characterised in that** the teeth (20) of the pipe connector (14) have a pitch equivalent to that of the teeth (21) of the threaded locking ring (11).

6. Pipe joint (10) according to claim 1, in which the end section of the pipe connector (14) extends from a threaded part (17) for screwing onto the threaded locking ring (11), **characterised by** comprising a second toothing (23) for retaining a pipe (12), close to said screw thread (17) for screwing on the locking ring (11).
